(19) Europäisches Patentamt / European Patent Office / Office européen des brevets

(11) **EP 4 734 011 A1**

(12) **EUROPEAN PATENT APPLICATION**

(43) Date of publication:
**29.04.2026 Bulletin 2026/18**

(21) Application number: **25207341.6**

(22) Date of filing: **07.10.2025**

(51) International Patent Classification (IPC):
**G06N 10/40** (2022.01)     *G06N 10/20* (2022.01)
**G06N 10/70** (2022.01)

(52) Cooperative Patent Classification (CPC):
**G06N 10/40;** B82Y 10/00; G06N 10/20; G06N 10/70

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **25.10.2024 US 202463712350 P**
**06.01.2025 US 202519010873**

(71) Applicant: **Microsoft Technology Licensing, LLC Redmond, WA 98052-6399 (US)**

(72) Inventors:
• **El DANDACHI, Tareq**
  **Redmond, 98052-6399 (US)**
• **LARSEN, Thorvald Wadum**
  **Redmond, 98052-6399 (US)**
• **CHAPMAN, Benjamin James**
  **Redmond, 98052-6399 (US)**

(74) Representative: **Page White Farrer**
  **Bedford House**
  **21a John Street**
  **London WC1N 2BF (GB)**

(54)    **RESONATOR TUNING**

(57)    A method for exciting a resonator at an estimated resonance frequency of the resonator comprises: (a) varying a frequency of an input signal applied to the resonator while recording an output signal from the resonator; (b) for each of a series of frequency values of the input signal, computing noise-filtered, complex first and second derivatives of a ratio of the output signal to the input signal; (c) for each of the series of frequency values of the input signal, computing a real part of a dot product of the complex first and second derivatives as vectors projected onto a complex plane; and (d) exciting the resonator an excitation frequency where the real part vanishes.

FIG. 1

**Description**

BACKGROUND

A quantum computer is a physical machine configured to execute logical operations based on quantum-mechanical phenomena. Such logical operations may include, for example, mathematical computation. Current interest in quantum-computer technology is motivated by analysis suggesting that the computational efficiency of an appropriately configured quantum computer may surpass that of any practicable non-quantum computer when applied to certain types of problems. Such problems include computer modeling of natural and synthetic quantum systems, integer factorization, data searching, and function optimization as applied to systems of linear equations and machine learning.

DETAILED DESCRIPTION

1. Overview

This disclosure presents a novel method for resonator tuning. Before introducing that feature by description of examples, certain contextual aspects of quantum-computer architecture will first be described.

2. Quantum-computer architecture

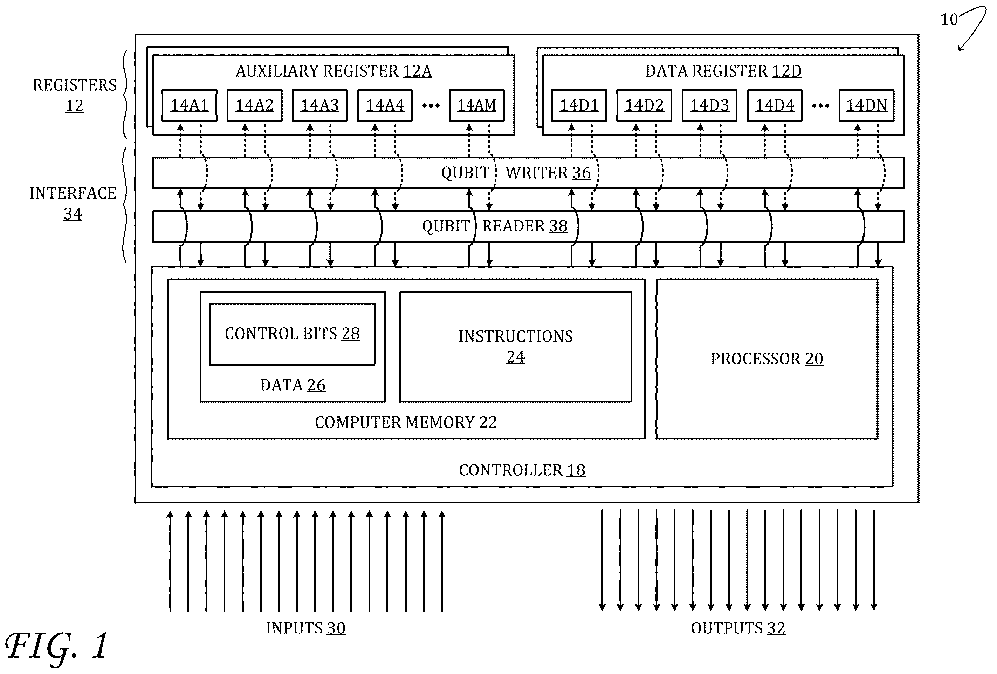

FIG. 1 shows aspects of an example quantum computer 10 configured to execute quantum-logic operations (*vide infra*). Whereas conventional computer memory holds digital data in an array of bits and enacts bit-wise logic operations, a quantum computer holds data in an array of qubits and operates quantum-mechanically on the qubits in order to implement the desired logic. Accordingly, quantum computer 10 of FIG. 1 includes a set of qubit registers 12-*e.g.,* data register 12D and auxiliary (or 'ancillary') register 12A. Each qubit register includes a series of qubits 14. The number of qubits in a qubit register is not particularly limited but may be determined based on the complexity of the quantum logic to be enacted by the quantum computer.

Qubits 14 of qubit register 12 may take various forms, depending on the desired architecture of quantum computer 10. Each qubit may comprise: a superconducting Josephson junction, a trapped ion, a trapped atom coupled to a high-finesse cavity, an atom or molecule confined within a fullerene, an ion or neutral dopant atom confined within a host lattice, a quantum dot exhibiting discrete spatial- or spin-electronic states, electron holes in semiconductor junctions entrained via an electrostatic trap, a coupled quantum-wire pair, an atomic nucleus addressable by magnetic resonance, a free electron in helium, a molecular magnet, or a metal-like carbon nanosphere, as non-limiting examples. A qubit may be implemented in the plural processing states corresponding to different modes of light propagation through linear optical elements (e.g., mirrors, beam splitters and phase shifters), as well as in states accumulated within a Bose-Einstein condensate. More generally, each qubit 14 may comprise any particle or system of particles that can exist in two or more discrete quantum states that can be measured and manipulated experimentally.

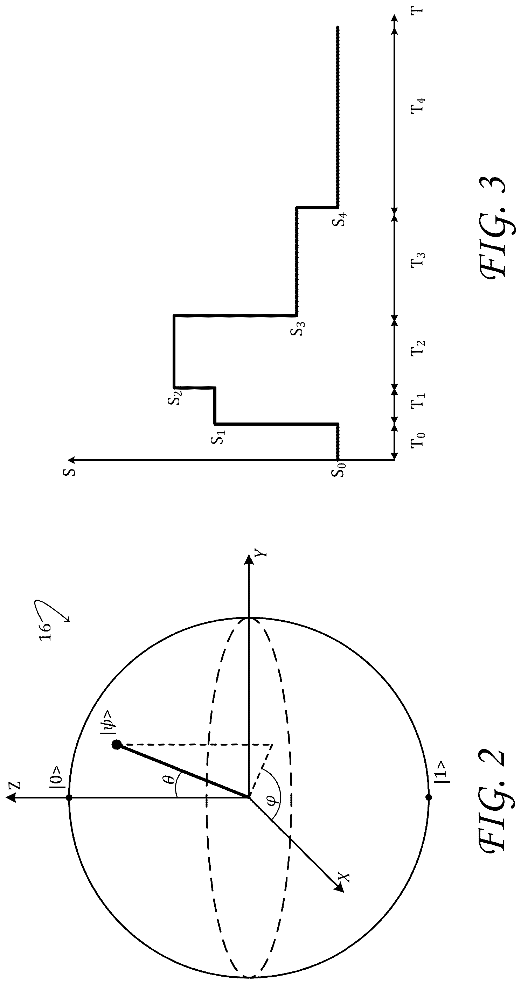

FIG. 2 is an illustration of a Bloch sphere 16, which provides a graphical description of some quantum mechanical aspects of an individual qubit 14. In this description, the north and south poles of the Bloch sphere correspond to the standard basis vectors $|0\rangle$ and $|1\rangle$, respectively-up and down spin states, for example, of an electron or other fermion. The set of points on the surface of the Bloch sphere comprise all possible pure states $|\psi\rangle$ of the qubit, while the interior points correspond to all possible mixed states. A mixed state of a given qubit may result from decoherence, which may occur because of undesirable coupling to external degrees of freedom.

Returning now to FIG. 1, quantum computer 10 includes a controller 18. The controller may include at least one processor 20 and associated computer memory 22. Processor 20 may be coupled operatively to peripheral componentry, such as network componentry, to enable the quantum computer to be operated remotely. Processor 20 may take the form of a central processing unit (CPU), a graphics processing unit (GPU), or the like. As such, controller 18 may comprise classical electronic componentry. The terms 'classical' and 'non-quantum' are applied herein to any component that can be modeled accurately without considering the quantum state of any individual particle therein. Classical electronic components include integrated, microlithographed transistors, resistors, and capacitors, for example. Computer memory 22 may be configured to hold program instructions 24 that cause processor 20 to execute any function or process of controller 18. The computer memory may also be configured to hold additional data 26. In some examples, data 26 may include a register of classical control bits 28 that influence the operation of the quantum computer during run time-e.g., to provide classical control input to one or more quantum-gate operations. In examples in which qubit register 12 is a low-temperature or cryogenic device, controller 18 may include control componentry operable at low or cryogenic temperatures-e.g., a field-programmable gate array (FPGA) operated at 77K. In such examples, the low-temperature control componentry may be coupled operatively to interface componentry operable at normal temperatures.

Controller 18 of quantum computer 10 is configured to receive a plurality of inputs 30 and to provide a plurality of outputs 32. The inputs and outputs may each comprise digital and/or analog lines. At least some of the inputs and outputs may be data lines through which data is provided to and/or extracted from the quantum computer. Other inputs may comprise control lines via which the operation of the quantum computer may be adjusted or otherwise controlled.

Controller 18 is operatively coupled to qubit registers 12 via quantum interface 34. The quantum interface is configured to exchange data (solid lines) bidirectionally with the controller. The quantum interface is further configured to exchange signal associated with the data (dashed lines) bidirectionally with the qubit registers. Depending on the physical implementation of qubits 14, such signal may include electrical, magnetic, and/or optical signal. Via signal conveyed through the quantum interface, the controller may interrogate and otherwise influence the quantum state held in any, some, or all of the qubit registers, as defined by the collective quantum state of the qubits therein. To that end, the quantum interface includes qubit writer 36 and qubit reader 38. The qubit writer is configured to output a signal to one or more qubits of a qubit register based on write-data received from the controller. The qubit reader is configured to sense a signal from one or more qubits of a qubit register and to output read-data to the controller based on the signal. The read-data received from the qubit reader may, in some examples, be an estimate of an observable to the measurement of the quantum state held in a qubit register. Taken together, controller 18 and interface 34 may be referred to as a 'control system'.

In some examples, suitably configured signal from qubit writer 36 may interact physically with one or more qubits 14 of a qubit register 12, to trigger measurement of the quantum state held in the one or more qubits. Qubit reader 38 may then sense a resulting signal released by the one or more qubits pursuant to the measurement, and may furnish read-data corresponding to the resulting signal to controller 18. Stated another way, the qubit reader may be configured to output, based on the signal received, an estimate of one or more observables reflecting the quantum state of one or more qubits of a qubit register, and to furnish the estimate to controller 18. In one non-limiting example, the qubit writer may provide, based on data from the controller, an appropriate voltage pulse or pulse train to an electrode of one or more qubits, to initiate a measurement. In short order, the qubit reader may sense photon emission from the one or more qubits and may assert a corresponding digital voltage level on a quantum-interface line into the controller. Generally speaking, any measurement of a quantum-mechanical state is defined by the operator $O$ corresponding to the observable to be measured; the result R of the measurement is guaranteed to be one of the allowed eigenvalues of $O$. In quantum computer 10, $R$ is statistically related to the qubit-register state prior to the measurement, but is not uniquely determined by the qubit-register state.

Pursuant to appropriate input from controller 18, quantum interface 34 may be configured to implement one or more quantum-logic gates to operate on the quantum state held in a qubit register 12. The term 'state vector' refers herein to the quantum state held in the series of qubits 14D of data register 12D of quantum computer 10. Whereas the function of each type of logic gate of a classical computer system is described according to a corresponding truth table, the function of each type of quantum gate is described by a corresponding operator matrix. The operator matrix operates on (*i.e.,* multiplies) the complex vector representing a qubit register state and effects a specified rotation of that vector in Hilbert space.

For example, the Hadamard gate H is defined by

$$H = \frac{1}{\sqrt{2}}\begin{bmatrix} 1 & 1 \\ 1 & -1 \end{bmatrix}. \qquad (1)$$

The H gate acts on a single qubit; it maps the basis state $|0\rangle$ to $(|0\rangle + |1\rangle)/\sqrt{2}$, and maps $|1\rangle$ to $(|0\rangle - |1\rangle)/\sqrt{2}$. Accordingly, the H gate creates a superposition of states that, when measured, have equal probability of revealing $|0\rangle$ or $|1\rangle$.

The phase gate S is defined by

$$S = \begin{bmatrix} 1 & 0 \\ 0 & e^{i\pi/2} \end{bmatrix}. \qquad (2)$$

The S gate leaves the basis state $|0\rangle$ unchanged but maps $|1\rangle$ to $e^{i\pi/2}|1\rangle$. Accordingly, the probability of measuring either $|0\rangle$ or $|1\rangle$ is unchanged by this gate, but the phase of the quantum state of the qubit is shifted. This is equivalent to rotating $|\psi\rangle$ by 90 degrees along a circle of latitude on the Bloch sphere of FIG. 2.

Some quantum gates operate on two or more qubits. The SWAP gate, for example, acts on two distinct qubits and swaps their values. This gate is defined by

$$\text{SWAP} = \begin{bmatrix} 1 & 0 & 0 & 0 \\ 0 & 0 & 1 & 0 \\ 0 & 1 & 0 & 0 \\ 0 & 0 & 0 & 1 \end{bmatrix}. \qquad (3)$$

A 'Clifford gate' is a quantum gate that belongs to the Clifford group-viz., a set of quantum gates that effect permutations of the Pauli operators. For the n-qubit case the Pauli operators form a group

$$P_n = \left\{ e^{\frac{i\theta\pi}{2}} \sigma_{j_1} \otimes \cdots \otimes \sigma_{j_n} \middle| \theta = 0,1,2,3, j_k = 0,1,2,3 \right\}, \qquad (4)$$

where $\sigma_0, \ldots \sigma_3$ are the one-qubit Pauli matrices. The Clifford group is then defined as the group of unitaries that normalize the Pauli group,

$$C_n = \{ V \in U_{2^n} | V P_n V^\dagger = P_n \}. \qquad (5)$$

The foregoing list of quantum gates and associated operator matrices is non-exhaustive, but is provided for ease of illustration. Other quantum gates include *Pauli - X, -Y,* and *-Z* gates, the $\sqrt{\text{NOT}}$ gate, additional phase-shift gates, the $\sqrt{\text{SWAP}}$ gate, controlled *cX, cY,* and *cZ* gates, and the Toffoli, Fredkin, Ising, and Deutsch gates, as non-limiting examples.

Continuing in FIG. 1, suitably configured signal from qubit writer 36 of quantum interface 34 may interact physically with one or more qubits 14 of a qubit register 12 so as to assert any desired quantum-gate operation. As noted above, the desired quantum-gate operations include specifically defined rotations of a complex vector representing a qubit register state. In some examples, in order to effect a desired rotation $O$, the qubit writer may apply a predetermined signal level $S_i$ for a predetermined duration $T_i$. In some examples, plural signal levels may be applied for plural sequenced or otherwise associated durations, as shown in FIG. 3, to assert a quantum-gate operation on one or more qubits of a qubit register. In general, each signal level $S_i$ and each duration $T_i$ is a control parameter adjustable by appropriate programming of controller 18.

The terms 'quantum circuit' and 'quantum algorithm' are used herein to describe a predetermined sequence of elementary quantum-gate and/or measurement operations executable by quantum computer 10. A quantum circuit may be used to transform the quantum state of a qubit register 12 to effect a classical or non-elementary quantum-gate operation or to apply a density operator, for example. In some examples, a quantum circuit may be used to enact a predefined operation $f(x)$, which may be incorporated into a complex sequence of operations. To ensure adjoint operation, a quantum circuit mapping n input qubits $|x\rangle$ to m output or auxiliary qubits $|y = f(x)\rangle$ may be defined as a quantum gate $O(|x\rangle \otimes |y\rangle)$ operating on the $(n + m)$ qubits. In this case, $O$ may be configured to pass the n input qubits unchanged but combine the result of the operation $f(x)$ with the auxiliary qubits via an XOR operation, such that $O(|x\rangle \otimes |y\rangle) = |x\rangle \otimes |y \otimes f(x)\rangle$.

Implicit in the description herein is that each qubit 14 of any qubit register 12 may be interrogated via quantum interface 34 so as to reveal with confidence the standard basis vector $|0\rangle$ or $|1\rangle$ that characterizes the quantum state of that qubit. In some implementations, however, measurement of the quantum state of a physical qubit may be subject to error. Accordingly, any qubit 14 may be implemented as a logical qubit, which includes a grouping of physical qubits measured according to an error-correcting quantum algorithm or circuit that reveals the quantum state of the logical qubit with above-threshold confidence.

3. Resonator tuning

As noted hereinabove, a computation on a quantum computer changes the quantum state of one or more qubits of a qubit register of the quantum computer. The result of the computation is revealed by sampling the changed quantum state via irreversible measurement of the one or more qubits. Measurement of a single qubit is guaranteed to reveal a basis state $|0\rangle$ or $|1\rangle$. For any qubit technology, the difference between $|0\rangle$ and $|1\rangle$ is reflected in an extremely subtle (e.g., single-particle) property, which is amplified by many orders of magnitude in the act of measurement. For some qubit technologies, the subtle property that distinguishes $|0\rangle$ from $|1\rangle$ is an electronic property interrogated by classical, electronic measurement. For some classes of qubits measured by interrogation of an electronic property, the required amplification is achieved by coupling the qubit to a tuned a.c. circuit, or 'resonator', wherein the characteristic resonance frequency of the circuit depends on the basis state of the coupled qubit at the moment at which the measurement is enacted. In order to prepare the quantum computer for the measurement operation, the resonator circuit is pre-tuned to resonance for the condition in which the coupled qubit is of a pre-determined basis state (e.g., $|1\rangle$).

Resonator coupling is useful, for example, in qubit technologies where the electronic property distinguishing $|0\rangle$ from $|1\rangle$ is a quantum capacitance. Quantum capacitance and its dependence on the quantum state of a system is an important measurement strategy of several leading qubit platforms, including semiconductor quantum dots and spin qubits, as well as scalable measurement-based topological qubit designs, where the quantum capacitance is measured in standard readout techniques such as dispersive gate sensing.

In some implementations a qubit device may comprise a complex, hybrid material configuration including semiconductors and/or superconductors. Such a device may include several parts-quantum dots (e.g., semiconducting, metallic or superconducting), topological or trivial superconductors, etc. Such a device may have many tuning parameters, such as a magnetic field, gate voltages, etc.

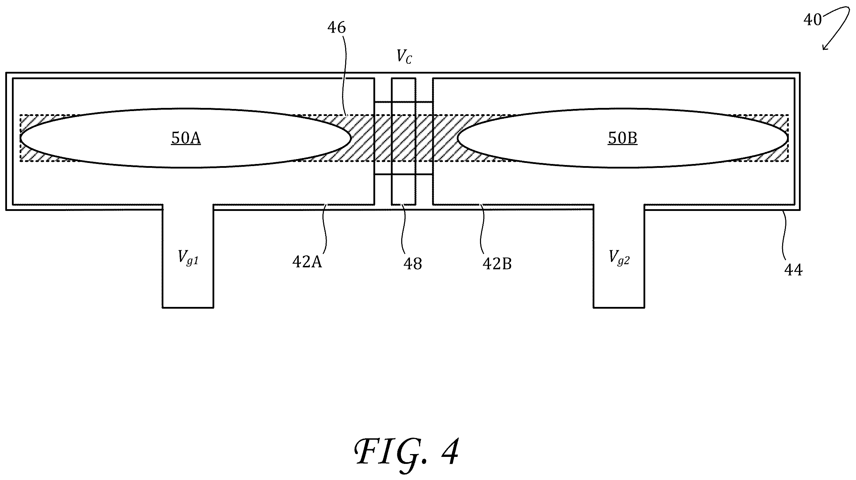

FIG. 4 shows aspects of an example configuration 40 that can be interrogated via a resonator-based quantum-capacitance measurement. More specifically, FIG. 4 is a schematic top view of an electrostatically defined, double quantum-dot device. Metallic depletion gates 42A and 42B are deposited on top of a semiconductor stack 44. The different semiconductors forming the stack (e.g., GaAs or Si/SiGe) create a quantum well-viz., a 2D electron gas-below the surface of the stack. The depletion gates are used to deplete the electron gas, creating an almost 1D channel 46 of electrons. The central electrode 48 can be biased at a voltage $V_c$ sufficient to separate the electron channel into two quantum dots, 50A and 50B, by depletion of the central region. The gate voltages $V_{g1}$ and $V_{g2}$ control the number of electrons residing in the quantum dots.

For a gate that couples capacitively to a quantum dot, the quantum capacitance can be defined as the deviation of the capacitance of the gate from its classical value $C_g$ (defined in the absence of the quantum-dot island),

$$C_Q = \frac{\partial Q_g}{\partial V_g} - C_g = \frac{C_g^2}{C_\Sigma}\frac{\partial\langle\widehat{N}\rangle}{\partial N_g}, \qquad (6)$$

where $Q_g$ is the electron charge on the island, $C_g$ is the (geometric) capacitance of the gate to the quantum dot, $C_\Sigma$ is the total geometric capacitance, $V_g$ is the voltage applied to the gate, $N_g = C_g V_g/e$ is the dimensionless gate voltage, and $\langle\widehat{N}\rangle$ is the expectation value of the number of electrons on the dot.

In this example and others, an accurate value of the resonance frequency, $f_0 = 2\pi\omega_0$, enables conversion of $C_Q$ data from raw impedance to units of femtofarads. In some examples, an accurate value of the resonance frequency enables extraction of the imaginary component of $C_Q$ for thermometry, QD-MZM, and the like. In some examples, an accurate value of the resonance frequency enables measurement of a resonator-coupled qubit at an acceptably high signal-to-noise ratio (SNR, *vide infra*).

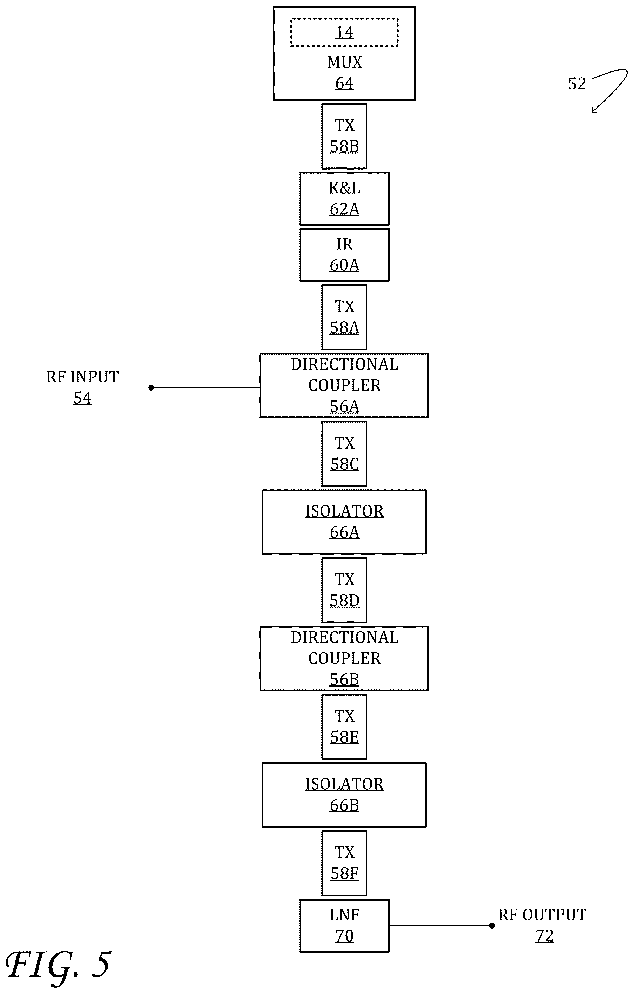

FIG. 5 shows aspects of an example readout chain 52 for measuring the quantum state of a resonator-coupled qubit. An input signal is injected into the readout chain at RF import line 54. In some examples, the input signal is an RF or microwave signal. In some examples the input signal is a sinusoid of a single frequency, or a reasonable facsimile thereof. The input signal is received in directional coupler 56A, which pushes the input signal through trans TX line 58A. From the trans TX line the input signal passes through IR low-pass filter 60A, K&L low-pass filter 62A, and then enters multiplexer (MUX) 64, through TX line 58B. The MUX may or may not comprise a physical qubit 14.

From MUX 64 the signal, transformed, generally, by interaction with the MUX and/or the physical qubit therein, reflects back toward directional coupler 56A. The directional coupler ensures that the reflected signal travels down through TX line 58C. Isolator 66A is provided to ensure that the reflected signal propagates without any added noise. From that point, the reflected signal passes through another TX line 58D, another directional coupler 56B, another isolator 68B, and TX lines 58E and F, and then emerges from linear filter (LNF) 70 at RF output 70.

Typically the resonance frequency of a resonator is influenced not only by the basis state of a coupled qubit but may be further influenced by one or more external variables. Therefore, the ability to reliably distinguish one basis state of a qubit from another may require empirical determination of the resonance frequency over a range of conditions (magnetic field strengths, gate voltages, etc.). Such determination may be enacted prior to operation of a quantum computer or pursuant to changing external variables, depending on the implementation.

Some comparative methods for estimating the resonance frequency of a resonator are based on locating a peak in the magnitude of a signal plotted against a scanned frequency. Some comparative methods are based on locating the center of the phase roll in the corresponding phase plot. Other comparative methods are based on locating a peak value of the group delay-i.e., the negative of the first derivative of the phase shift with respect to frequency. Still other comparative methods are based on 'resonator fitting', where magnitude and phase data are fit to a linearized model of a resonator circuit together with expected background admittances and non-idealities.

The comparative methods based on plot features are simplest to implement but are heavily impacted by the readout-chain background of the resonator circuit. The readout-chain background may be non-uniform, however, due to the interaction of various filters or cables and to the interfering effects of multiple paths through the circuit-viz., fano interference. These factors, which may impart an asymmetric shape to the resonance, reduce the SNR for resonance-frequency estimation. The reader interested in that aspect is referred to D. Rieger et al. FANO INTERFERENCE IN MICROWAVE RESONATOR MEASUREMENTS, arxiv/2209.03036, which is hereby incorporated herein by reference, for all purposes. In qubit implementations involving Majorana zero-mode (MZM) loops arranged between the poles of a large magnet, the required cable lengths may cause significant interference.

The other comparative methods noted above are somewhat more resilient to *linear* readout-chain backgrounds. It will be noted that the comparative methods based on group delay require that the background is locally linear near the resonance frequency. In contrast to the comparative methods based on plot features, resonator fitting requires the background to be fully linear. In other words, no higher-order background is allowed (as may result from a background standing wave, for instance). Resonator fitting is also susceptible to fitting error due to the limitations of a simple resistor-inductor-capacitor (RLC) model on a more complicated network topology, possibly including more than one pole and a non-trivial background.

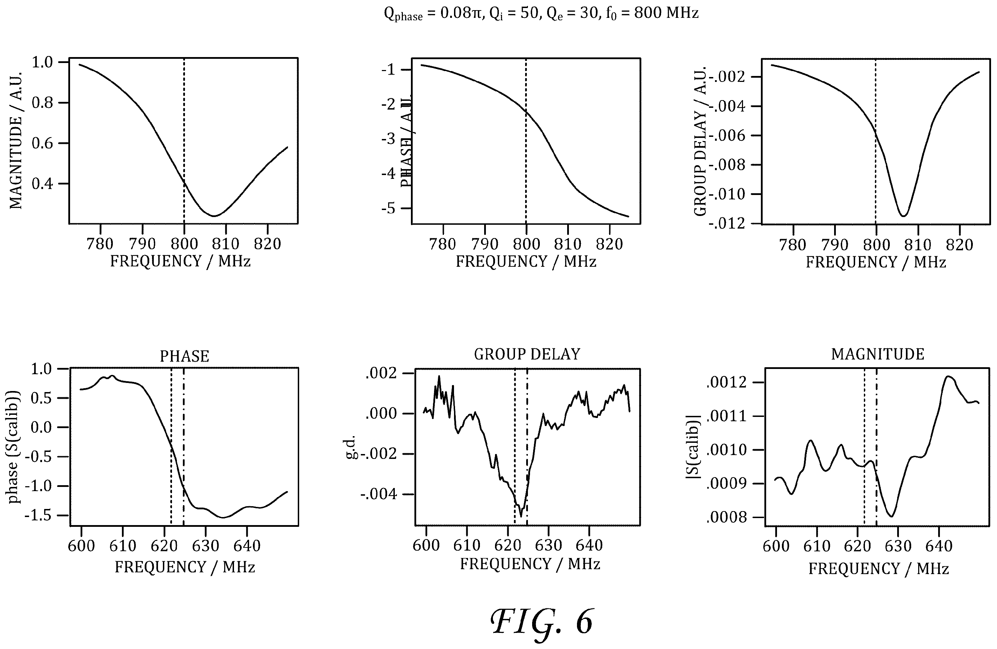

The plots shown in FIG. 6 illustrate some of the pitfalls of the comparative methods based on plot features, including group delay. The blue curves of the top row show a simulated resonator response in terms of magnitude (left), phase (middle), and group delay (right). The true resonance frequency is shown by the green vertical lines. These plots demonstrate that the comparative methods based on the plot features may report resonance frequencies shifted from their actual values. A similar outcome is demonstrated by the corresponding plots of real data, on the bottom row, where the red vertical lines show the resonance frequency estimated by the comparative methods, and the green vertical lines show the resonance frequency estimated by the method here disclosed.

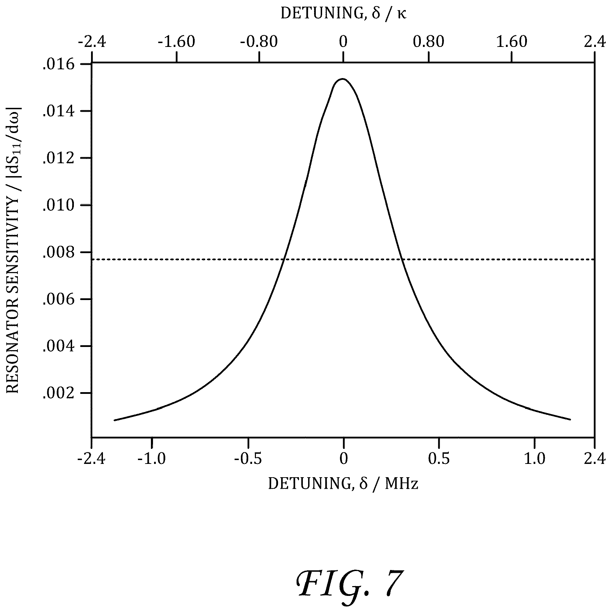

The plot in FIG. 7 shows that error in resonance-frequency estimation decreases the SNR of downstream $C_Q$ measurement. In this plot the resonator sensitivity plotted on the $y$ axis indicates the degree to which a small change in $C_Q$ changes the outcome of an RF measurement; it corresponds, therefore, to the SNR. The resonator detuning plotted on the $x$ axis indicates the degree to which the drive signal is off-resonance. More particularly, the plot shows that excitation of a resonator at a frequency that is off-resonance by about $0.5\kappa$ is sufficient to reduce the SNR by a factor of 2. Here and elsewhere, $\kappa$ is inversely related to the quality factor $Q$ of a resonator, $\kappa = f_0 / Q$. For frequencies in the range of 600 to 1000 MHz, an accuracy better than $\pm 0.5$ MHz is desirable for resonator-coupled qubit measurement.

In order to address the defects of the comparative methods of resonance-frequency estimation, and to provide further advantages, this disclosure presents a different method for estimating the resonance frequency of a resonator. The disclosed method defines an 'orthogonality metric' for the data acquired in a frequency-sweep resonator-attenuance measurement. Methods based on the orthogonality metric enable the resonance frequency to be estimated more accurately than in any of the comparative methods.

The disclosed method is based on observations that the complex first- and second-derivative vectors of an S-parameter curve in *I-Q* space are perpendicular at the resonance frequency and that the second-derivative vector exhibits a sign change at the resonance frequency. In some implementations, the raw *S*-parameter curve is smoothed via suitable filtering prior to or during estimation of the first and second derivatives. The orthogonality metric is then computed as the real component of the dot product of the first-derivative vector and the complex conjugate of the second-derivative vector. Graphically, the orthogonality metric can be plotted against frequency; the sharp zero crossing of that curve occurs at the resonance frequency, and the width and height of the curve may be used to determine the $\kappa$ value of the resonator.

The first and second derivatives of the $S_{11}$ parameter with respect to angular frequency $\omega$ are derived analytically:

$$\frac{\partial S_{11}}{\partial \omega} = \frac{1}{2} \frac{i\kappa_e e^{i(\phi + \tau\omega)}}{(0.5\kappa + i\delta\omega)^2} + O(\tau) \quad \text{and} \qquad (7)$$

$$\frac{\partial^2 S_{11}}{\partial \omega^2} = \frac{i\kappa_e e^{i(\phi + \tau\omega)}}{(0.5\kappa + i\delta\omega)^3} + O(\tau, \tau^2). \qquad (8)$$

In these expressions, i is the imaginary unit, $\varphi$ is the resonator phase factor, $\tau$ is the amount of electrical delay in a model of the resonator, and $\delta\omega$ is $\omega$ minus the resonance frequency $\omega_0$. Generally speaking, $\kappa_i$ and $\kappa_e$ parameters correspond to the coupling of the resonator to the qubit and to the readout chain, respectively. Here and elsewhere $\kappa$ with no subscript is $\kappa_i + \kappa_e$. The complex ratio of the first derivative to the second is:

$$\left.\frac{\partial^2 S_{11}}{\partial \omega^2}\middle/\frac{\partial^2 S_{11}}{\partial \omega^2}\right. = \frac{i\kappa_e}{4} - \frac{\delta\omega}{2}. \qquad (9)$$

The real part of this ratio provides directly the angular frequency shift $\delta\omega$ away from resonance, while the imaginary part provides $\kappa$.

Written as vectors in *I-Q* space, the first and second derivatives are orthogonal at resonance, where the frequency shift is zero.

$$\frac{\partial S_{11}}{\partial \omega} \perp \frac{\partial^2 S_{11}}{\partial \omega^2} \text{ when } \delta\omega = 0. \qquad (10)$$

Accordingly, the resonance frequency can be obtained from the dot product of the first derivative and the complex conjugate of the second derivative,

$$Re\left[\frac{\partial S_{11}}{\partial \omega} \cdot \left(\frac{\partial^2 S_{11}}{\partial \omega^2}\right)^*\right] \rightarrow 0 \text{ at } \omega_0. \qquad (11)$$

Further, the loss characteristic at resonance can be obtained from eq 9, by evaluating at $\omega_0$,

$$\kappa \approx \frac{1}{4} \cdot Im\left(\left.\frac{\partial^2 S_{11}}{\partial \omega^2}\middle/\frac{\partial^2 S_{11}}{\partial \omega^2}\right.\right)\Bigg]_{\omega=\omega_0} \qquad (12)$$

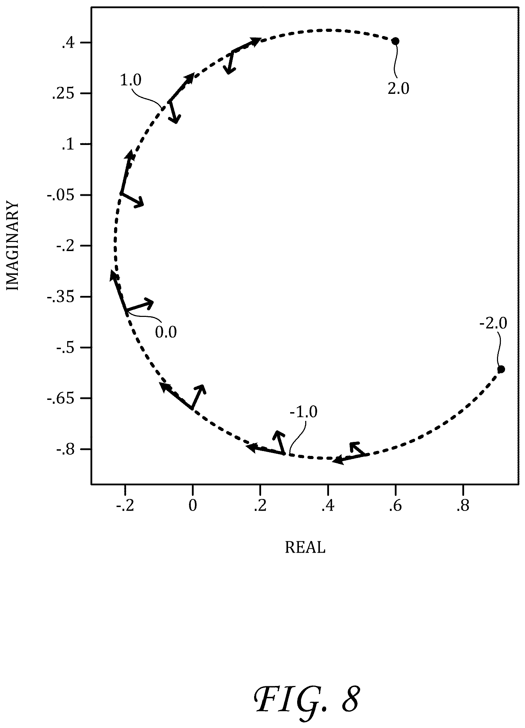

FIG. 8 shows a plot of $S_{11}$ in *I-Q* space. In this plot the red coloration becomes more intense as the frequency drops farther below resonance, and the blue coloration becomes more intense as the frequency rises above resonance. Accordingly, the black portion of the plot corresponds to the resonance condition. Azimuthal travel along the circular plot corresponds to a change in phase of the output signal (e.g., the result of electrical delay, or, a qubit in a basis state that differs from the state for which the resonator was tuned). By contrast, radial movement, toward the center of the circular plot, corresponds to attenuation-i.e., energy loss in the resonator.

For the illustrated selection of the data points, the green arrow represents the first-derivative vector in *I-Q* space and the orange arrow represents the second-derivative vector. These vectors are parallel at limiting low frequency. They gradually separate and become orthogonal at resonance, and then continue to separate, becoming antiparallel at limiting high frequency.

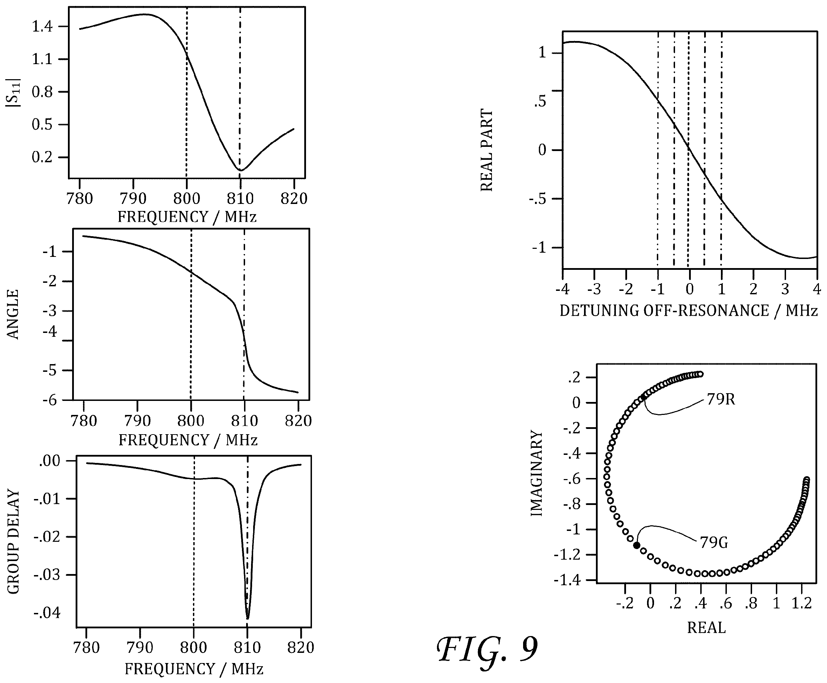

The *I-Q* space plot of FIG. 9 shows, as expected, that the SNR is greatest at the point of true resonance (green dot 79G), where adjacent sampled points have the greatest separation. The companion plot of the real part of the dot product as a function of frequency (upper right) shows that this function crosses zero at resonance. Furthermore, the heights and widths of the peaks in the companion plot can be used to extract the $\kappa$ values, which report on energy loss in the resonator. This information is not available with any of the comparative methods hereinabove, except for resonator fitting, provided that a trace of the data is available. The *I-Q* space plot further illustrates that the point of true resonance may differ from points of apparent resonance-e.g., red dot 79R, which corresponds to the vertical red lines in the plots to the left, estimated according to the features of those plots. For comparison, the vertical green lines show the true resonance frequency.

Evaluation of the orthogonality-metric approach using real and simulated data has shown that it is suitably robust towards a variety of background noise sources-electrical delay and *Q*-phase delay, among others.

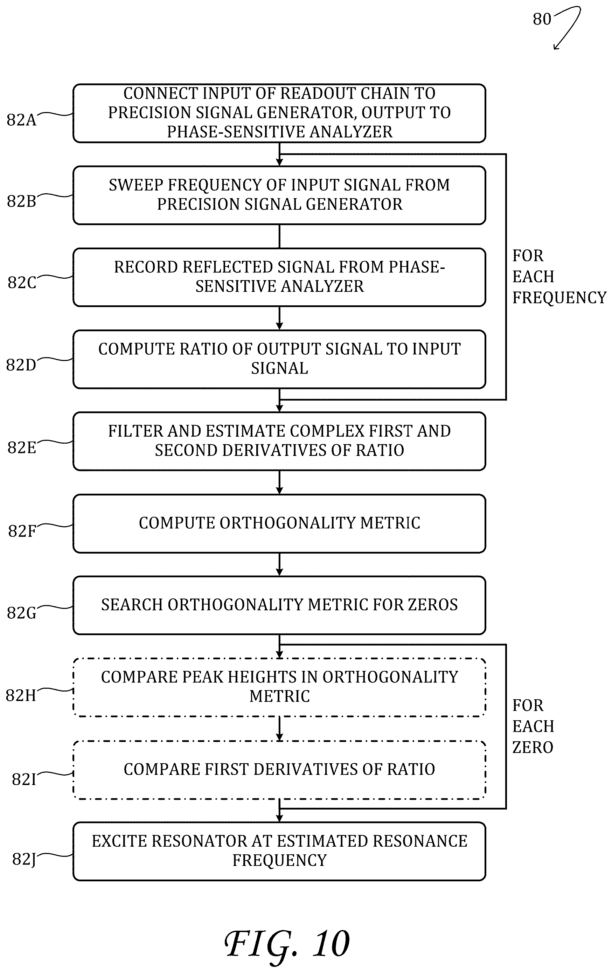

FIG. 10 shows aspects of an example method 80 for exciting a resonator at an estimated resonance frequency of the resonator.

At 82A the input of the readout chain is connected to a precision signal generator, and the output of the readout chain is connected to a phase-sensitive analyzer. At 82B the frequency of the signal generator is swept (e.g., ramped) from an estimated lower limit to an estimated upper limit at a suitably fine increment. Over the example range of 600 to 1000 megahertz (MHz), the increment may be 100 kilohertz. Concurrently, at 82C, the reflected signal is recorded via the phase-sensitive analyzer.

At 82D the ratio of the output signal to the input signal is expressed as a complex number $S_{11}$ for each of a sequence of frequencies $\omega$. Because the frequencies are updated at regular time intervals (e.g., linearly), the $S_{11}$ values

form a time series and may be processed in the time domain (*vide infra*). In comparative methods, an absolute magnitude, phase shift and/or group delay value could, in principle, be extracted for each of the $S_{11}$ values. At 82E, however, noise-filtered values of the first and second derivatives of $S_{11}$ with respect to frequency are computed.

Numerous variants of step 82E are contemplated in this disclosure. In some variants, the series of $S_{11}$ values is noise-filtered prior to estimation of the first and second derivatives. More particularly, low-pass filtering may be used to remove unrealistically high-frequency components, which are attributable to noise and/or aliasing. A Gaussian or Kalman filter may be applied to the series, for instance. Thereafter, the first and second derivatives can be estimated by explicit finite difference using the noise-filtered data. In some variants, explicit finite difference may be used to estimate the first derivative, which is then subjected to additional, low-pass noise filtering. The noise-filtered first derivative can then be used to estimate the second derivative, with or without subsequent filtering. In other variants, the acts of derivative estimation and noise filtering can be more closely linked. Suitably short segments of the $S_{11}$ curve may be fit to a suitable model, such as a polynomial model, from which smooth values of the first and second derivatives are obtained analytically. In some variants, a Savitsky-Golay or related algorithm may be used. In still other variants, the $S_{11}$ curve or suitably short segments thereof may be transformed into the frequency domain via a fast Fourier transform, subjected to suitable low-pass filtering, and then transformed back into the time domain. Various other derivative-estimation and filtering implementations are equally envisaged.

At 82F an orthogonality metric is computed based on the smoothed values of the first and second derivatives, and optionally plotted. At 82G the values of the orthogonality metric are searched to find zeroes and/or zero crossings. In some examples a golden search in one dimension may be used. In some examples different local segments of the frequency space may be searched separately.

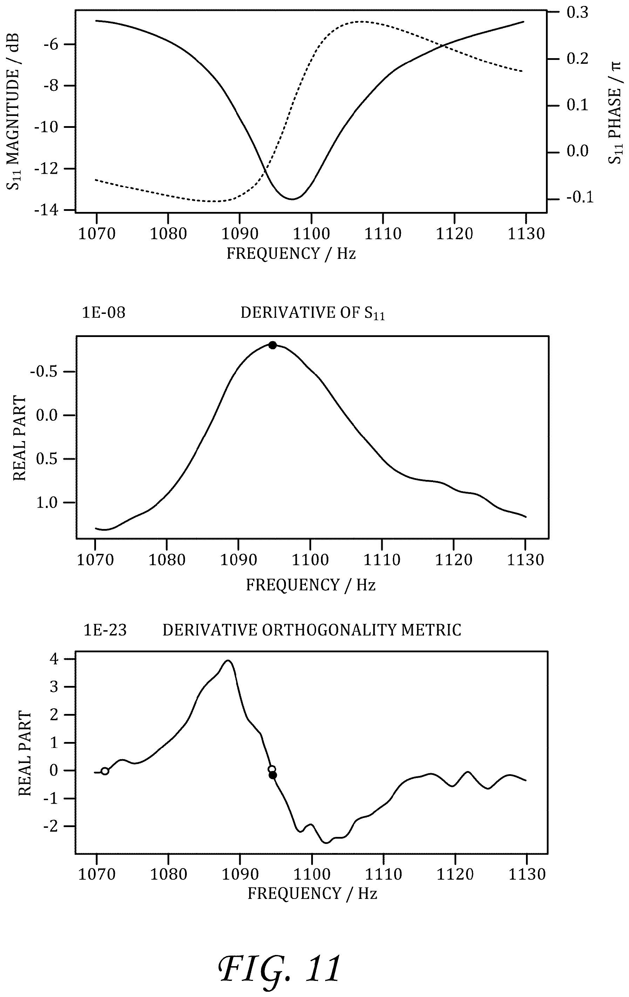

FIG. 11 shows aspects of the application of method 80 to actual frequency-sweep resonator-attenuance data. The illustrated example shows that the orthogonality condition alone may not be sufficient for identifying the true resonance frequency of a resonator in every scenario. This is because the background may present additional resonances due to experimental artifacts. Such artifacts may give rise to oscillations in which the orthogonality metric approaches or crosses zero. As shown in the plots, however, the magnitude of the oscillations will generally be smaller for experimental artifacts than for the true resonance. Thus, when the peaks on either side of a zero crossing are examined, larger peaks provide greater confidence that the crossing corresponds to a true resonance. This is demonstrated in the bottom plot of FIG. 11. Another discriminant between true resonance and an artifact is based on a plot of the first derivative of $S_{11}$ with respect to frequency, is shown in the middle of FIG. 11. The larger the magnitude of the first derivative at the frequency of the zero crossing, the greater the confidence that the crossing corresponds to the resonance frequency. The top plot in FIG. 11 demonstrates the comparative estimation methods applied to the same data and the defects thereof.

Returning now to FIG. 10, method 80 includes optional steps 82H and 82I, which may be enacted in scenarios in which the method returns more than one zero or zero crossing. At 82H the peaks on either side of each zero or zero crossing are compared; the zero or zero crossing corresponding to the largest of the return peaks are selected as the estimate of the resonance frequency. At 82I the values of the first derivative of $S_{11}$ with respect to frequency are compared for each zero or zero crossing returned. From these frequencies, the zero or zero crossing corresponding to the largest absolute value of the derivative is selected as the estimate of the resonance frequency. In implementations in which both 82H and 82I are used in the same method, suitable fuzzy logic can be used to reconcile conflicting resonance-frequency selections.

Finally, at 82J of method 80 the resonator is excited at the resonance frequency estimated in view of the foregoing logic.

4. Classical-computer description and conclusion

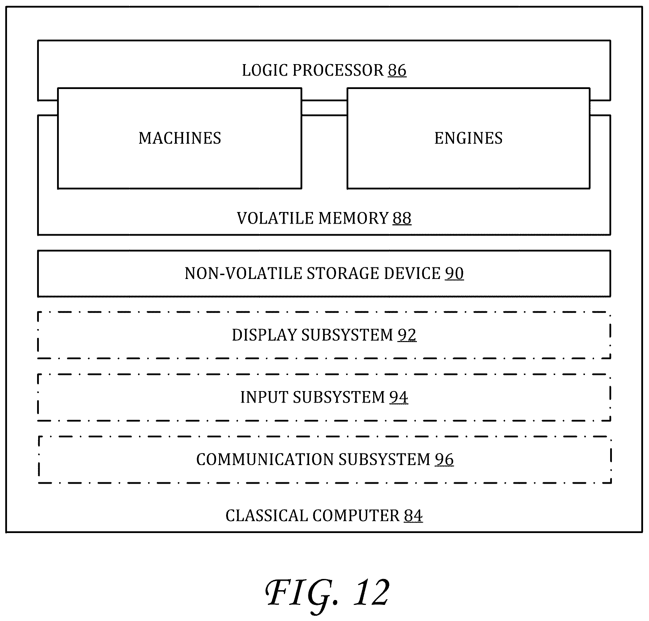

FIG. 12 schematically shows a non-limiting embodiment of a classical computer 1200 that can enact one or more of the methods and processes described above, or be used to implement the classical computers described above. Classical computer 1200 is shown in simplified form. Components of the classical computer 1200 may be instantiated in one or more personal computers, server computers, network computing devices, and/or other computing devices.

Classical computer 1200 includes a logic processor 1234 volatile memory 1236, and a non-volatile storage device 1238. Classical computer 1200 may optionally include a display subsystem 1240, input subsystem 1242, communication subsystem 1244, and/or other components not shown in FIG. 12.

Logic processor 1234 includes one or more physical devices configured to execute instructions. For example, the logic processor may be configured to execute instructions that are part of one or more applications, programs, routines, libraries, objects, components, data structures, or other logical constructs. Such instructions may be implemented to perform a task, implement a data type, transform the state of one or more components, achieve a technical effect, or otherwise arrive at a desired result.

The logic processor may include one or more physical processors (hardware) configured to execute software instructions. Additionally or alternatively, the logic processor may include one or more hardware logic circuits or firmware devices configured to execute hardware-implemented logic or firmware instructions. Processors of the logic processor 1234 may be single-core or multi-core, and the instructions executed thereon may be configured for sequential, parallel, and/or distributed processing. Individual components of the logic processor optionally may be distributed among two or more separate devices, which may be remotely located and/or configured for coordinated processing. Aspects of the logic processor may be virtualized and executed by remotely accessible, networked computing devices configured in a cloud-computing configuration. In such a case, these virtualized aspects are run on different physical logic processors of various different machines, it will be understood.

Non-volatile storage device 1238 includes one or more physical devices configured to hold instructions executable by the logic processors to implement the methods and processes described herein. When such methods and processes are implemented, the state of non-volatile storage device 1238 may be transformed-*e.g.*, to hold different data.

Non-volatile storage device 1238 may include physical devices that are removable and/or built in. Non-volatile storage device 1238 may include optical memory, semiconductor memory, and/or magnetic memory, or other mass storage device technology. Non-volatile storage device 1238 may include nonvolatile, dynamic, static, read/write, read-only, sequential-access, location-addressable, file-addressable, and/or content-addressable devices. It will be appreciated that non-volatile storage device 1238 is configured to hold instructions even when power is cut to the non-volatile storage device 1238.

Volatile memory 1236 may include physical devices that include random access memory. Volatile memory 1236 is typically utilized by logic processor 1234 to temporarily store information during processing of software instructions. It will be appreciated that volatile memory 1236 typically does not continue to store instructions when power is cut to the volatile memory 1236.

Aspects of logic processor 1234, volatile memory 1236, and non-volatile storage device 1238 may be integrated together into one or more hardware-logic components. Such hardware-logic components may include field-programmable gate arrays (FPGAs), program- and application-specific integrated circuits (PASIC / ASICs), program- and application-specific standard products (PSSP / ASSPs), system-on-a-chip (SOC), and complex programmable logic devices (CPLDs), for example.

The terms 'module,' 'program,' and 'engine' may be used to describe an aspect of classical computer 1200 typically implemented in software by a processor to perform a particular function using portions of volatile memory, which function involves transformative processing that specially configures the processor to perform the function. Thus, a module, program, or engine may be instantiated via logic processor 1234 executing instructions held by non-volatile storage device 1238, using portions of volatile memory 1236. It will be understood that different modules, programs, and/or engines may be instantiated from the same application, service, code block, object, library, routine, API, function, *etc.* Likewise, the same module, program, and/or engine may be instantiated by different applications, services, code blocks, objects, routines, APIs, functions, *etc.* The terms 'module,' 'program,' and 'engine' may encompass individual or groups of executable files, data files, libraries, drivers, scripts, database records, *etc.*

When included, display subsystem 1240 may be used to present a visual representation of data held by non-volatile storage device 1238. The visual representation may take the form of a graphical user interface (GUI). As the herein described methods and processes change the data held by the non-volatile storage device, and thus transform the state of the non-volatile storage device, the state of display subsystem 1240 may likewise be transformed to visually represent changes in the underlying data. Display subsystem 1240 may include one or more display devices utilizing virtually any type of technology. Such display devices may be combined with logic processor 1234, volatile memory 1236, and/or non-volatile storage device 1238 in a shared enclosure, or such display devices may be peripheral display devices.

When included, input subsystem 1242 may comprise or interface with one or more user-input devices such as a keyboard, mouse, or touch screen. In some embodiments, the input subsystem may comprise or interface with selected natural user input (NUI) componentry.

When included, communication subsystem 1244 may be configured to communicatively couple various computing devices described herein with each other, and with other devices. Communication subsystem 1244 may include wired and/or wireless communication devices compatible with one or more different communication protocols. As non-limiting examples, the communication subsystem may be configured for communication via a wireless telephone network, or a wired or wireless local- or wide-area network. In some embodiments, the communication subsystem may allow classical computer 1200 to send and/or receive messages to and/or from other devices via a network such as the Internet.

One aspect of this disclosure is directed to a method for exciting a resonator at an estimated resonance frequency of the resonator, the method comprising (a) varying a frequency of an input signal applied to the resonator while recording an output signal from the resonator; (b) for each of a series of frequency values of the input signal, computing noise-filtered, complex first and second derivatives of a ratio of the output signal to the input signal; (c) for each of the series of frequency values of the input signal, computing a real part of a dot product of the complex first and second derivatives as vectors projected onto a complex plane; and (d) exciting the resonator an excitation frequency where the real part of the dot product vanishes.

In some implementations varying the frequency comprises sweeping the frequency between a pre-determined upper frequency limit and a pre-determined lower frequency limit. In some implementations the method further comprises extracting a resonator-quality metric from an imaginary part of the dot product evaluated at the frequency where the real part vanishes. In some implementations the resonator is coupled to a physical qubit of a quantum computer. In some implementations the resonator is configured to measure a quantum capacitance of the qubit. In some implementations the method is enacted prior to operation of the quantum computer. In some implementations the physical qubit is arranged in a magnetic field, and the method is repeated after adjustment of the magnetic field. In some implementations the method further comprises selecting the excitation frequency further based on heights of opposing peaks in a neighborhood of the excitation frequency. In some implementations the method further comprises selecting the excitation frequency further based on a magnitude of the first derivative at the excitation frequency.

Another aspect of this disclosure is directed to a quantum computer comprising a physical qubit, a resonator coupled to the physical qubit, a readout chain coupled to the resonator, and a signal generator coupled to the readout chain. The signal generator is configured to excite the readout chain with a signal of an estimated resonance frequency, the estimated resonance frequency found by: (a) varying a frequency of an input signal applied to the resonator while recording an output signal from the resonator, (b) for each of a series of frequency values of the input signal, computing noise-filtered, complex first and second derivatives of a ratio of the output signal to the input signal, (c) for each of the series of frequency values of the input signal, computing a real part of a dot product of the complex first and second derivatives as vectors projected onto a complex plane, and (d) returning as the estimated resonance frequency a frequency where the real part of the dot product vanishes.

In some implementations varying the frequency comprises sweeping the frequency between a pre-determined upper frequency limit and a pre-determined lower frequency limit. In some implementations the resonator is configured to measure a quantum capacitance of the qubit. In some implementations the method is enacted prior to operation of the quantum computer. In some implementations the physical qubit is arranged in a magnetic field, and the method is repeated after adjustment of the magnetic field. In some implementations the estimated resonance frequency is returned further based on heights of opposing peaks in a neighborhood of the excitation frequency. In some implementations the estimated resonance frequency is returned further based on a magnitude of the first derivative at the excitation frequency.

Another aspect of this disclosure is directed to a method for exciting a resonator at an estimated resonance frequency of the resonator, the method comprising: (a) varying a frequency of an input signal applied to the resonator while recording an output signal from the resonator; (b) for each of a series of frequency values of the input signal, computing noise-filtered, complex first and second derivatives of a ratio of the output signal to the input signal; (c) for each of the series of frequency values of the input signal, computing a real part of a dot product of the complex first and second derivatives as vectors projected onto a complex plane; (d) extracting a resonator-quality metric from an imaginary part of the dot product evaluated at the frequency where the real part vanishes; and (e) exciting the resonator a frequency where the real part of the dot product vanishes.

In some implementations varying the frequency comprises sweeping the frequency between a pre-determined upper frequency limit and a pre-determined lower frequency limit. In some implementations the resonator is coupled to a physical qubit of a quantum computer. In some implementations the method is enacted prior to or during operation of the quantum computer.

This disclosure is presented by way of example and with reference to the attached drawing figures. Components, process steps, and other elements that may be substantially the same in one or more of the figures are identified coordinately and described with minimal repetition. It will be noted, however, that elements identified coordinately may also differ to some degree. It will be further noted that the figures are schematic and generally not drawn to scale. Rather, the various drawing scales, aspect ratios, and numbers of components shown in the figures may be purposely distorted to make certain features or relationships easier to see.

It will be understood that the configurations and/or approaches described herein are exemplary and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed. In that spirit, the phrase 'based at least partly on' is intended to remind the reader that the functional and/or conditional logic illustrated herein neither requires nor excludes suitable additional logic, executing in combination with the illustrated logic, to provide additional benefits.

The subject matter of the present disclosure includes all novel and non-obvious combinations and sub-combinations of the various processes, systems and configurations, and other features, functions, acts, and/or properties disclosed herein, as well as any and all equivalents thereof.

# EP 4 734 011 A1

**Claims**

1. A method for exciting a resonator at an estimated resonance frequency of the resonator, the method comprising:

varying a frequency of an input signal applied to the resonator while recording an output signal from the resonator;
for each of a series of frequency values of the input signal, computing noise-filtered, complex first and second derivatives of a ratio of the output signal to the input signal;
for each of the series of frequency values of the input signal, computing a real part of a dot product of the complex first and second derivatives as vectors projected onto a complex plane; and
exciting the resonator an excitation frequency where the real part of the dot product vanishes.

2. The method of claim 1 wherein varying the frequency comprises sweeping the frequency between a pre-determined upper frequency limit and a predetermined lower frequency limit.

3. The method of claim 1 or claim 2, further comprising extracting a resonator-quality metric from an imaginary part of the dot product evaluated at the frequency where the real part vanishes.

4. The method of any preceding claim, wherein the resonator is coupled to a physical qubit of a quantum computer.

5. The method of claim 4, wherein the resonator is configured to measure a quantum capacitance of the qubit.

6. The method of claim 4 or claim 5, wherein the method is enacted prior to or during operation of the quantum computer.

7. The method of any of claims 4 to 6 wherein the physical qubit is arranged in a magnetic field, and the method is repeated after adjustment of the magnetic field.

8. The method of any preceding claim further comprising selecting the excitation frequency further based on heights of opposing peaks in a neighborhood of the excitation frequency.

9. The method of any preceding claim, further comprising selecting the excitation frequency further based on a magnitude of the first derivative at the excitation frequency.

10. A quantum computer comprising:

a physical qubit;
a resonator coupled to the physical qubit;
a readout chain coupled to the resonator;
a signal generator coupled to the readout chain and configured to excite the readout chain with a signal of an estimated resonance frequency, the estimated resonance frequency found by a method comprising:

varying a frequency of an input signal applied to the resonator while recording an output signal from the resonator,
for each of a series of frequency values of the input signal, computing noise-filtered, complex first and second derivatives of a ratio of the output signal to the input signal,
for each of the series of frequency values of the input signal, computing a real part of a dot product of the complex first and second derivatives as vectors projected onto a complex plane, and
returning as the estimated resonance frequency a frequency where the real part of the dot product vanishes.

11. The quantum computer of claim 10, wherein varying the frequency comprises sweeping the frequency between a pre-determined upper frequency limit and a pre-determined lower frequency limit.

12. The quantum computer of claim 10 or claim 11, wherein the resonator is configured to measure a quantum capacitance of the qubit.

13. The quantum computer of any of claims 10 to 12, wherein the method is enacted prior to operation of the quantum computer.

14. The quantum computer of any of claims 10 to 12, wherein the physical qubit is arranged in a magnetic field, and the method is repeated after adjustment of the magnetic field.

15. The quantum computer of claim 10 wherein:

i) the estimated resonance frequency is returned further based on heights of opposing peaks in a neighborhood of the excitation frequency; and/or
ii) the estimated resonance frequency is returned further based on a magnitude of the first derivative at the excitation frequency.

FIG. 1

REGISTERS 12

AUXILIARY REGISTER 12A

14A1 | 14A2 | 14A3 | 14A4 | ••• | 14AM

DATA REGISTER 12D

14D1 | 14D2 | 14D3 | 14D4 | ••• | 14DN

INTERFACE 34

QUBIT WRITER 36

QUBIT READER 38

CONTROL BITS 28

DATA 26

INSTRUCTIONS 24

COMPUTER MEMORY 22

PROCESSOR 20

CONTROLLER 18

INPUTS 30

OUTPUTS 32

10

*FIG. 3*

*FIG. 2*

FIG. 4

```
            ┌─────────────────┐
            │ ┌ ─ ─ ─ ─ ─ ─ ┐ │
            │     14          │        52 ↗
            │ └ ─ ─ ─ ─ ─ ─ ┘ │           ↓
            │      MUX        │
            │      64         │
            └─────────────────┘
                   ┌──────┐
                   │  TX  │
                   │ 58B  │
                   └──────┘
                   ┌──────┐
                   │ K&L  │
                   │ 62A  │
                   └──────┘
                   ┌──────┐
                   │  IR  │
                   │ 60A  │
                   └──────┘
                   ┌──────┐
                   │  TX  │
                   │ 58A  │
                   └──────┘
            ┌─────────────────┐
RF INPUT ●──│   DIRECTIONAL   │
   54       │    COUPLER      │
            │      56A        │
            └─────────────────┘
                   ┌──────┐
                   │  TX  │
                   │ 58C  │
                   └──────┘
            ┌─────────────────┐
            │    ISOLATOR     │
            │      66A        │
            └─────────────────┘
                   ┌──────┐
                   │  TX  │
                   │ 58D  │
                   └──────┘
            ┌─────────────────┐
            │   DIRECTIONAL   │
            │    COUPLER      │
            │      56B        │
            └─────────────────┘
                   ┌──────┐
                   │  TX  │
                   │ 58E  │
                   └──────┘
            ┌─────────────────┐
            │    ISOLATOR     │
            │      66B        │
            └─────────────────┘
                   ┌──────┐
                   │  TX  │
                   │ 58F  │
                   └──────┘
            ┌─────────────────┐
            │      LNF        │──● RF OUTPUT
            │      70         │        72
            └─────────────────┘
```

## FIG. 5

$Q_{phase} = 0.08\pi$, $Q_i = 50$, $Q_e = 30$, $f_0 = 800$ MHz

FIG. 6

EP 4 734 011 A1

*FIG. 7*

*FIG. 8*

*FIG. 9*

80

| 82A | CONNECT INPUT OF READOUT CHAIN TO PRECISION SIGNAL GENERATOR, OUTPUT TO PHASE-SENSITIVE ANALYZER |

| 82B | SWEEP FREQUENCY OF INPUT SIGNAL FROM PRECISION SIGNAL GENERATOR |

| 82C | RECORD REFLECTED SIGNAL FROM PHASE-SENSITIVE ANALYZER |

| 82D | COMPUTE RATIO OF OUTPUT SIGNAL TO INPUT SIGNAL |

FOR EACH FREQUENCY

| 82E | FILTER AND ESTIMATE COMPLEX FIRST AND SECOND DERIVATIVES OF RATIO |

| 82F | COMPUTE ORTHOGONALITY METRIC |

| 82G | SEARCH ORTHOGONALITY METRIC FOR ZEROS |

| 82H | COMPARE PEAK HEIGHTS IN ORTHOGONALITY METRIC |

| 82I | COMPARE FIRST DERIVATIVES OF RATIO |

FOR EACH ZERO

| 82J | EXCITE RESONATOR AT ESTIMATED RESONANCE FREQUENCY |

*FIG. 10*

FIG. 11

LOGIC PROCESSOR 86

MACHINES

ENGINES

VOLATILE MEMORY 88

NON-VOLATILE STORAGE DEVICE 90

DISPLAY SUBSYSTEM 92

INPUT SUBSYSTEM 94

COMMUNICATION SUBSYSTEM 96

CLASSICAL COMPUTER 84

FIG. 12

EP 4 734 011 A1

Europäisches
Patentamt
European
Patent Office
Office européen
des brevets

# EUROPEAN SEARCH REPORT

**Application Number**

EP 25 20 7341

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 11 808 796 B2 (MICROSOFT TECHNOLOGY LICENSING LLC [US]) 7 November 2023 (2023-11-07) * Abstract * * columns 1, 14-16, 18 * * figures 7-10 * ----- | 1-15 | INV. G06N10/40 ADD. G06N10/20 G06N10/70 |
| Y | HYYPPÄ ERIC ET AL: "Reducing Leakage of Single-Qubit Gates for Superconducting Quantum Processors Using Analytical Control Pulse Envelopes", PRX QUANTUM, vol. 5, no. 3, 26 August 2024 (2024-08-26) , XP093358257, ISSN: 2691-3399, DOI: 10.1103/PRXQuantum.5.030353 * Abstract * * p2,p12 * ----- | 1-15 | |
| A | A WALLRAFF ET AL: "Strong coupling of a single photon to a superconducting qubit using circuit quantum electrodynamics", NATURE, vol. 431, no. 7005, 9 September 2004 (2004-09-09), pages 162-167, XP055698936, DOI: 10.1038/nature02851 * the whole document * ----- | 1-15 | TECHNICAL FIELDS SEARCHED (IPC) G06N B82Y |
| A | HAJRUDIN BE\V{S}I\'C ET AL: "Resonance frequency tracking schemes for micro- and nanomechanical resonators", ARXIV.ORG, CORNELL UNIVERSITY LIBRARY, 201 OLIN LIBRARY CORNELL UNIVERSITY ITHACA, NY 14853, 20 September 2023 (2023-09-20), XP091619035, * the whole document * ----- | 1-15 | |

The present search report has been drawn up for all claims

| Place of search | Date of completion of the search | Examiner |
|---|---|---|
| The Hague | 2 February 2026 | Veynachter, Alexis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 20 7341

This annex lists the patent family members relating to the patent documents cited in the above-mentioned European search report.
The members are as contained in the European Patent Office EDP file on
The European Patent Office is in no way liable for these particulars which are merely given for the purpose of information.

02-02-2026

| Patent document cited in search report | | Publication date | Patent family member(s) | Publication date |
|---|---|---|---|---|
| US 11808796 | B2 | 07-11-2023 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **D. RIEGER et al.** *FANO INTERFERENCE IN MICROWAVE RESONATOR MEASUREMENTS*